# EUROPEAN PATENT SPECIFICATION

(11) **EP 3 126 640 B1**
(45) Date of publication and mention of the grant of the patent: **25.09.2024**
(21) Application number: 15773710.7
(22) Date of filing: 23.03.2015
(51) Int. Cl.: F01D 11/22, F02C 3/13, F01D 11/24, F02C 7/18

(54) **ACTIVE CLEARANCE CONTROL FOR GAS TURBINE ENGINE**
AKTIVE SPIELRAUMSTEUERUNG FÜR EINEN GASTURBINENMOTOR
CONTRÔLE ACTIF DES JEUX POUR MOTEUR À TURBINE À GAZ

(30) Priority: 31.03.2014 US 201461972613 P
(43) Date of publication of application: 08.02.2017
(73) Proprietor: RTX Corporation, Farmington, CT 06032 (US)
(72) Inventor: PHILBRICK, Graham Ryan, Coventry, Connecticut 06238 (US); LAGUEUX, Ken, Berlin, Connecticut 06037 (US)
(74) Representative: Dehns
(86) International application number: PCT/US2015/021988
(87) International publication number: WO 2015/153171

(56) References cited:
- EP-A1- 0 102 308
- EP-A2- 2 604 807
- EP-A2- 2 604 807
- EP-B1- 1 038 093
- US-A- 4 230 439
- US-A- 4 849 895
- US-A1- 2009 317 242
- US-A1- 2011 236 179
- US-A1- 2013 034 424
- US-B1- 6 487 491

## Description

### BACKGROUND

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Operation of the gas turbine engine results in the combustor section generating large amounts of heat. The heat generated by the combustor section elevates the operating temperatures of the turbine section. When the turbine section temperature elevates, it causes a turbine case that surrounds turbine blades to expand. The expansion of the turbine case can form a larger gap between the turbine blades and the turbine case. This larger gap allows air to travel between the turbine blades and the turbine case, which decreases the efficiency of the gas turbine engine. Therefore, there is a need to reduce the gap between the turbine blades and the turbine case.

EP 2 604 807 A discloses a prior art method in accordance with the preamble of claim 1. EP 0 102 308 A1 discloses a clearance control for gas turbine engine. US 4 230 439 A discloses system and method for active clearance control.

### SUMMARY

According to an aspect of the present invention, there is provided a method as set forth in claim 1.

In an embodiment of the above, the first operation state includes cruise conditions.

In a further embodiment of any of the above, step b) includes selectively moving a valve to direct the first fluid source or the second fluid source to at least one active clearance control manifold.

In a further embodiment of any of the above, directing the first fluid source to at least one active clearance control manifold causes a turbine case to shrink.

In a further embodiment of any of the above, directing the second fluid source to at least one active clearance control manifold causes the turbine case to expand.

In a further embodiment of any of the above, the first fluid and the second fluid are air.

In a further embodiment of any of the above, step b) includes selectively moving a valve to direct a portion of the first fluid source and a portion of the second fluid source to the at least one active clearance manifold.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates an example gas turbine engine.
Figure 2 illustrates a schematic view of an active clearance control system.
Figure 3 illustrates another schematic view of the active clearance control system of Figure 2.

### DETAILED DESCRIPTION

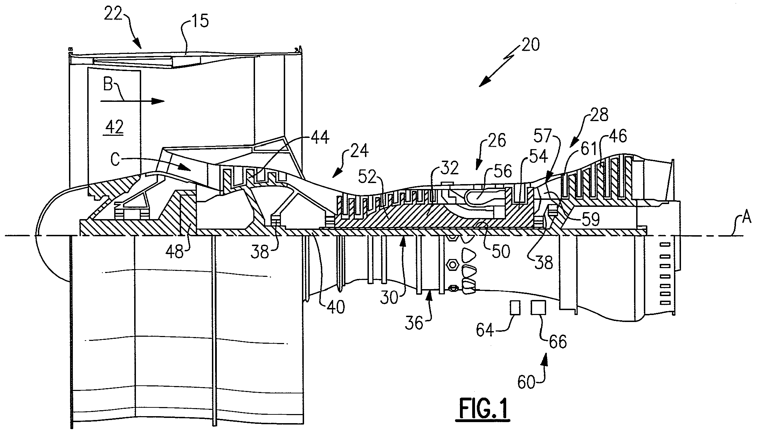

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the combustor section 26 or even aft of the turbine section 28, and the fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition - - typically cruise at about 0.8 Mach and about 35,000 feet (10,668 m). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

As shown in Figures 1-3, an active clearance control system 60 directs a fluid, such as air 80, towards a turbine case 61 of the turbine section 28. The active clearance system 60 includes a conduit 62 for directing the fluid from either the fan section 22 or the compressor section 24 to a first manifold 64 and a second manifold 66. The first and second manifolds 64 and 66 each include multiple openings for directing the fluid towards the turbine section 28. The fluid is fed into the conduit 62 by either a first intake 68 or a second intake 70. The first intake 68 in this example is in fluid communication with the low pressure compressor 44. The second intake 70 is in fluid communication with the high pressure compressor 52.

A controller 71 directs a valve 72 to communicate fluid from either the first intake 68, the second intake 70, a combination of both the first and second intakes 68 and 70, or blocks the fluid from flowing into the conduit 62.

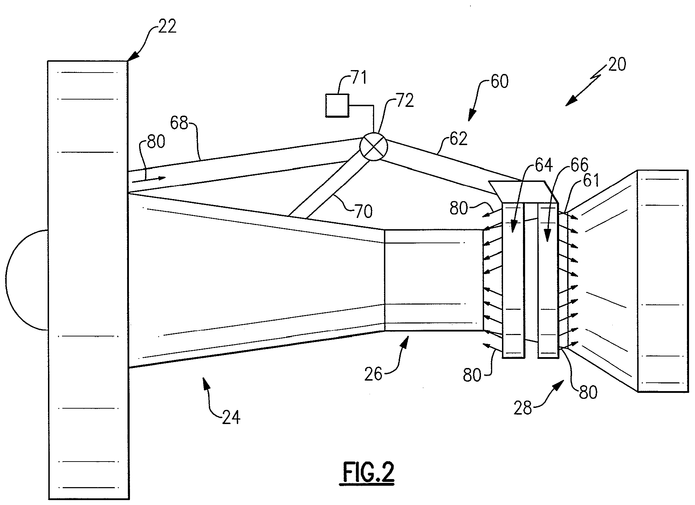

When the gas turbine engine 20 operates under cruise conditions (Figure 2), the valve 72 opens the first intake 68 to direct cooler fluid into the conduit 62. The cooler fluid in the conduit 62 then enters the first manifold 64 and the second manifold 66 both adjacent the high pressure turbine 54 in order to shrink the turbine case 61.

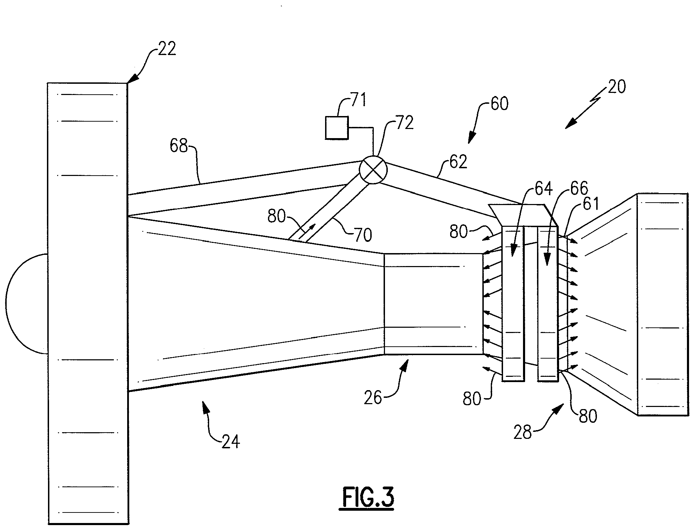

When the gas turbine engine 20 is wind milling, such as during an inflight restart (Figure 3), the valve 72 opens the second intake 70 to direct warmer fluid for the compressor section 24 into the conduit 62. The warmer fluid in the conduit 62 then enters the first and second manifolds 64 and 66. The warmer fluid remaining in the compressor section 24 heats the turbine case 61 to prevent the turbine case 61 from shrinking too quickly from cool air that would be flowing over an exterior of the turbine case 61. The warmer fluid from the compressor section 24 prevents interaction between the turbine case 61 and the turbine blades.

When the gas turbine engine 20 is operating under initial startup conditions (Figure 3), the valve 72 opens the second intake 70 to direct warmer fluid from the compressor section 24 into the conduit 62. The warmer fluid in the conduit 62 then enters the first and second manifolds 64 and 66. The warmer air generated by the compressor section 24 heats the turbine case 61 and reduces the likelihood of any interaction between the turbine blades and the turbine case 61 during startup. The warmer air also uniformly heats the turbine case 61 to aid startup.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A method of operating an active clearance control for a gas turbine engine (20) having a low speed spool including an inner shaft (40) interconnecting a fan (42), a low pressure compressor (44) and a low pressure turbine (46) and a high speed spool including an outer shaft (50) interconnecting a high pressure compressor (52) and a high pressure turbine (54), the method comprising:
a) determining an operating state of the gas turbine engine (20); and
b) directing a first fluid source in response to a first operating state or a second fluid source in response to a second operating state to at least one active clearance control manifold (64, 66), wherein the first source is a first intake (68) and the second source is a second intake (70), the second intake (70) is configured to receive compressor fluid from the high pressure compressor (52) and the at least one active clearance control manifold (64, 66) includes a first manifold (64) and a second manifold (66);
**characterised in that**:
the first intake (68) is located in the low pressure compressor (44), and **in that** the second operation state includes wind milling.

2. The method of claim 1, wherein the first operation state includes cruise conditions.

3. The method of claim 1 or 2, wherein the step b) includes selectively moving a valve (72) to direct the first fluid source or the second fluid source to the at least one active clearance control manifold (64, 66).

4. The method of claim 1 or 2, wherein the step b) includes selectively moving a valve (72) to direct a portion of the first fluid source and a portion of the second fluid source to the at least one active clearance manifold (64, 66).

5. The method of any of claims 1 to 4, wherein directing the first fluid source to the at least one active clearance control manifold (64, 66) causes a turbine case (61) to shrink.

6. The method of any of claims 1 to 5, wherein directing the second fluid source to the at least one active clearance control manifold (64, 66) causes the turbine case (61) to expand.

7. The method of any of claims 1 to 6, wherein the first fluid and the second fluid are air.

## Patentansprüche

1. Verfahren zum Betreiben einer aktiven Spielraumsteuerung für einen Gasturbinenmotor (20), der eine Niederdrehzahlspule, die eine innere Welle (40) beinhaltet, die einen Lüfter (42), einen Niederdruckverdichter (44) und eine Niederdruckturbine (46) miteinander verbindet, und eine Hochdrehzahlspule aufweist, die eine äußere Welle (50) beinhaltet, die einen Hochdruckverdichter (52) und eine Hochdruckturbine (54) miteinander verbindet, wobei das Verfahren Folgendes umfasst:
a) Bestimmen eines Betriebszustands des Gasturbinenmotors (20); und
b) Leiten einer ersten Fluidquelle als Reaktion auf einen ersten Betriebszustand oder einer zweiten Fluidquelle als Reaktion auf einen zweiten Betriebszustand zu mindestens einem Verteiler (64, 66) zur aktiven Spielraumsteuerung, wobei die erste Quelle ein erster Einlass (68) ist und die zweite Quelle ein zweiter Einlass (70) ist, der zweite Einlass (70) konfiguriert ist, um Verdichterfluid aus dem Hochdruckverdichter (52) zu empfangen, und der mindestens eine Verteiler (64, 66) zur aktiven Spielraumsteuerung einen ersten Verteiler (64) und einen zweiten Verteiler (66) beinhaltet;
**dadurch gekennzeichnet, dass**:
sich der erste Einlass (68) in dem Niederdruckverdichter (44) befindet, und dass der zweite Betriebszustand Windmühlenbetrieb beinhaltet.

2. Verfahren nach Anspruch 1, wobei der erste Betriebszustand Reiseflugbedingungen beinhaltet.

3. Verfahren nach Anspruch 1 oder 2, wobei der Schritt b) selektives Bewegen eines Ventils (72) beinhaltet, um die erste Fluidquelle oder die zweite Fluidquelle zu dem mindestens einen Verteiler (64, 66) zur aktiven Spielraumsteuerung zu leiten.

4. Verfahren nach Anspruch 1 oder 2, wobei der Schritt b) selektives Bewegen eines Ventils (72) beinhaltet, um einen Teil der ersten Fluidquelle und einen Teil der zweiten Fluidquelle zu dem mindestens einen Verteiler (64, 66) zur aktiven Spielraumsteuerung zu leiten.

5. Verfahren nach einem der Ansprüche 1 bis 4, wobei Leiten der ersten Fluidquelle zu dem mindestens einen Verteiler (64, 66) zur aktiven Spielraumsteuerung bewirkt, dass eine Turbinengehäuse (61) schrumpft.

6. Verfahren nach einem der Ansprüche 1 bis 5, wobei Leiten der zweiten Fluidquelle zu dem mindestens einen Verteiler (64, 66) zur aktiven Spielraumsteuerung bewirkt, dass das Turbinengehäuse (61) expandiert.

7. Verfahren nach einem der Ansprüche 1 bis 6, wobei das erste Fluid und das zweite Fluid Luft sind.

## Revendications

1. Procédé de fonctionnement d'un contrôle actif des jeux pour un moteur à turbine à gaz (20) ayant un corps à basse vitesse comportant un arbre interne (40) interconnectant un ventilateur (42), un compresseur basse pression (44) et une turbine basse pression (46) et un corps à grande vitesse comportant un arbre externe (50) interconnectant un compresseur haute pression (52) et une turbine haute pression (54), le procédé comprenant :
a) la détermination d'un état de fonctionnement du moteur à turbine à gaz (20) ; et
b) la direction d'une première source de fluide en réponse à un premier état de fonctionnement ou une seconde source de fluide en réponse à un second état de fonctionnement vers au moins un collecteur de contrôle actif des jeux (64, 66), dans lequel la première source est une première admission (68) et la seconde source est une seconde admission (70), la seconde admission (70) est configurée pour recevoir du fluide de compresseur provenant du compresseur haute pression (52) et l'au moins un collecteur de contrôle actif des jeux (64, 66) comporte un premier un collecteur (64) et un second collecteur (66) ;
**caractérisé en ce que** :
la première admission (68) est située dans le compresseur basse pression (44), et **en ce que** le second état de fonctionnement comporte une éolienne.

2. Procédé selon la revendication 1, dans lequel le premier état de fonctionnement comporte des conditions de croisière.

3. Procédé selon la revendication 1 ou 2, dans lequel l'étape b) comporte le déplacement sélectif d'une vanne (72) pour diriger la première source de fluide ou la seconde source de fluide vers l'au moins un collecteur de contrôle actif des jeux (64, 66).

4. Procédé selon la revendication 1 ou 2, dans lequel l'étape b) comporte le déplacement sélectif d'une vanne (72) pour diriger une partie de la première source de fluide et une partie de la seconde source de fluide vers l'au moins un collecteur de contrôle actif des jeux (64, 66).

5. Procédé selon l'une quelconque des revendications 1 à 4, dans lequel le fait de diriger la première source de fluide vers l'au moins un collecteur de contrôle actif des jeux (64, 66) provoque le rétrécissement d'un boîtier de turbine (61).

6. Procédé selon l'une quelconque des revendications 1 à 5, dans lequel le fait de diriger la seconde source de fluide vers l'au moins un collecteur de contrôle actif des jeux (64, 66) provoque la dilatation d'un boîtier de turbine (61).

7. Procédé selon l'une quelconque des revendications 1 à 6, dans lequel le premier fluide et le second fluide sont de l'air.
